# EUROPÄISCHE PATENTSCHRIFT

(11) **EP 1 885 050 B1**
(45) Veröffentlichungstag und Bekanntmachung des Hinweises auf die Patenterteilung: **17.02.2010**
(21) Anmeldenummer: 06016036.3
(22) Anmeldetag: 01.08.2006
(51) Int. Cl.: H02M 3/156

(54) **System und Verfahren zur Gatespannungsbestimmung eines Leistungsfeldeffekttransistors**
System for determination of the gate voltage of a power fet, and method
Système pour determiner la tension de la grille d'un transistor à effet de champ, et procédé

(43) Veröffentlichungstag der Anmeldung: 06.02.2008
(73) Patentinhaber: SIEMENS AKTIENGESELLSCHAFT, 80333 München (DE)
(72) Erfinder: Klamm, Arnold, 76870 Kandel (DE); Kort, Valentin, 76829 Landau (DE)

(56) Entgegenhaltungen:
- EP-A- 0 650 251
- US-A1- 2004 160 218
- US-A1- 2006 097 770
- US-B1- 6 198 258
- US-B1- 6 229 293

## Beschreibung

Die Erfindung betrifft zwei Systeme sowie zwei Verfahren zur lastabhängigen Bestimmung einer zwischen Gate und Source eines Leistungsfeldeffekttransistors während des eingeschalteten Zustands des Leistungsfeldeffekttransistors anzulegenden Eingangsspannung, wobei der Leistungsfeldeffekttransistor zur Einstellung einer Ausgangsspannung eines Schaltnetzteiles durch getaktetes Ein- und Ausschalten vorgesehen ist und wobei das Schaltnetzteil neben dem Leistungsfeldeffekttransistor eine Ladespule, eine Diode sowie einen Glättungskondensator aufweist.

Die Erfindung betrifft weiterhin eine Treiberstufe sowie ein Schaltnetzteil, umfassend ein System der vorgenannten Art.

Aus dem Fachaufsatz von Herbert Sax und Michael Barou mit dem Titel "Smart-Power: verlustarme Steuerungs-Treiber", Fachmagazin ELEKTRONIK, WEKA Fachzeitschriftenverlag, Poing, DE, Bd. 40, Nr. 7, 2. April 1991 (1991-04-02), Seiten 152, 154-156, XP000225181 ISSN: 0013-5658 ist eine Sättigungsregelung für einen MOSFET auf 150 mV bekannt, die den notwendigen Spannungsabfall zwischen Source und Drain schafft. Dadurch kann ein niedriger Laststrom über eine Sens-FET-Zelle des MOSFETs an einem Strommesswiderstand noch ausgewertet werden. Die Sättigungsschaltung weist einen Operationsverstärker auf, der über einen weiteren Transistor die Gatespannung des MOSFETs regelt.

Leistungsfeldeffekttransistoren, insbesondere MOSFETs, werden heute in einer Vielzahl leistungselektronischer Applikationen niedriger und mittlerer Leistung eingesetzt. In Schaltungen für Schaltnetzteile wie beispielsweise Hoch- oder Tiefsetzsteller, Sperr- oder Durchflusswandler, Brückengleichrichter etc. werden Leistungsfeldeffekttransistoren dazu benötigt, aus einer vorgegebenen Eingangsspannung eine für eine zu speisende Last geeignete Ausgangsspannung zu erzeugen. Hierzu wird die Eingangsspannung durch periodisches Ein- und Ausschalten der Leistungsfeldeffekttransistoren in hochfrequente Impulse zerhackt, deren Mittelwert der gewünschten Ausgangsspannung entspricht.

Zum Ein- und Ausschalten der Leistungsfeldeffekttransistoren wird eine Treiberstufe benötigt, die den Steuereingang des Leistungsfeldeffekttransistors, das so genannte Gate, mit annähernd rechteckförmigen Spannungsimpulsen ansteuert. Die Höhe dieser Spannungsimpulse ist nahezu konstant und hängt im Allgemeinen von der Versorgungsspannung der Treiberstufe ab. Ab Erreichen einer gewissen Schwellspannung zwischen Gate- und Sourceeingang des MOSFETs, der so genannten Thresholdspannung, bildet sich zwischen den Anschlüssen Drain und Source ein leitender Kanal mit Majoritätsladungsträgern aus, so dass das Bauelement vollständig einschaltet.

Um unabhängig von den physikalischen Eigenschaften des zu steuernden Leistungsfeldeffekttransistors ein sicheres Durchsteuern im eingeschalteten Zustand zu gewährleisten und somit eine unzulässig hohe Durchlassspannung am Bauelement im leitenden Betrieb zu vermeiden, wird die Treiberspannung mit einem gewissen Sicherheitsabstand zur Thresholdspannung des Leistungsfeldeffekttransistors gewählt.

Der Leistungsfeldeffekttransistor besitzt eine Gatekapazität, die beim Ein- und Ausschalten des Bauelementes umgeladen wird. Hierbei fließt ein Gatestrom, dessen Höhe zum einen von der Gatekapazität des Bauelementes abhängt, zum anderen aber auch von der Höhe der zur Steuerung verwendeten Spannungsimpulse. Durch das periodische Umschalten der Leistungsfeldeffekttransistoren entstehen hierdurch Schaltverluste, die zum einen den Wirkungsgrad der jeweiligen Applikation reduzieren, in die das Bauelement eingebaut ist. Zum anderen muss die durch die Schaltverluste erzeugte Wärme sicher aus dem Bauelement und der Treiberstufe abgeführt werden, wodurch je nach Schaltfrequenz ein nicht unerheblicher Aufwand zur Kühlung des Leistungsfeldeffekttransistors bzw. der Treiberstufe resultiert.

Der Erfindung liegt die Aufgabe zugrunde, möglichst geringe Verluste bei einem Betrieb eines Leistungsfeldeffekttransistors in einem Schaltnetzteil zu ermöglichen.

Diese Aufgabe wird durch ein erstes System gelöst zur lastabhängigen Bestimmung einer zwischen Gate und Source eines Leistungsfeldeffekttransistors während des eingeschalteten Zustands des Leistungsfeldeffekttransistors anzulegenden Einschaltspannung, wobei der Leistungsfeldeffekttransistor zur Einstellung einer Ausgangsspannung eines Schaltnetzteiles durch getaktetes Ein- und Ausschalten vorgesehen ist, wobei das Schaltnetzteil neben dem Leistungsfeldeffekttransistor eine Ladespule, eine Diode sowie einen Glättungskondensator aufweist und wobei das System umfasst:
- eine Spannungsmesseinrichtung zur Messung eines zur Ausgangsspannung proportionalen Spannungsmesswertes und zum Vergleich des Spannungsmesswertes mit einem Referenzwert, wobei der Spannungsmesswert derart gestaltet ist, dass eine Änderung einer mittels des Schaltnetzteiles versorgten Last durch die Messung des Spannungsmesswertes erfassbar ist, und
- eine Steuerungseinheit zur Bestimmung der Einschaltspannung in Abhängigkeit des Ergebnisses besagten Vergleiches derart, dass die Einschaltspannung mit zunehmender Last erhöht und mit abnehmender Last reduziert wird.

Diese Aufgabe wird alternativ durch ein zweites System gelöst, welches anstelle einer Spannungsmesseinrichtung zur Messung eines zur Ausgangsspannung proportionalen Spannungsmesswertes eine Strommesseinrichtung zur Messung eines zu einem Ausgangsstrom des Schaltnetzteils proportionalen Strommesswertes und zum Vergleich des Strommesswertes mit einem weiteren Referenzwert aufweist, wobei der Strommesswert derart gestaltet ist, dass eine Änderung einer mittels des Schaltnetzteiles versorgten Last durch die Messung des Strommesswertes erfassbar ist.

Ferner wird die Aufgabe durch eine Treiberstufe zur Ansteuerung eines Leistungsfeldeffekttransistors sowie durch ein Schaltnetzteil, umfassend ein derartiges System, gelöst.

Darüber hinaus wird die Aufgabe durch ein erstes Verfahren gelöst zur lastabhängigen Bestimmung einer zwischen Gate und Source eines Leistungsfeldeffekttransistors während des eingeschalteten Zustands des Leistungsfeldeffekttransistors anzulegenden Einschaltspannung, wobei der Leistungsfeldeffekttransistor zur Einstellung einer Ausgangsspannung eines Schaltnetzteiles mit einer Ladespule, einer Diode sowie einem Glättungskondensator durch getaktetes Ein- und Ausschalten vorgesehen ist und wobei das Verfahren folgende Schritte umfasst:
- Messen eines zur Ausgangsspannung proportionalen Spannungsmesswertes und Vergleich des Spannungsmesswertes mit einem Referenzwert mittels einer Spannungsmesseinrichtung, wobei der Spannungsmesswert derart gestaltet ist, dass eine Änderung einer mittels des Schaltnetzteiles versorgten Last durch die Messung des Spannungsmesswertes erfassbar ist, und
- Bestimmen der Einschaltspannung in Abhängigkeit des Ergebnisses besagten Vergleiches mittels einer Steuerungseinheit derart, dass die Einschaltspannung mit zunehmender Last erhöht und mit abnehmender Last reduziert wird.

Schließlich wird die Aufgabe alternativ durch ein zweites Verfahren gelöst, welches anstelle des Schrittes: Messen eines zur Ausgangsspannung proportionalen Spannungsmesswertes den Schritt umfasst: Messen eines zu einem Ausgangsstrom des Schaltnetzteils proportionalen Strommesswertes und Vergleich des Strommesswertes mit einem weiteren Referenzwert mittels einer Strommesseinrichtung, wobei der Strommesswert derart gestaltet ist, dass eine Änderung einer mittels des Schaltnetzteiles versorgten Last durch die Messung des Strommesswertes erfassbar ist.

Der Erfindung liegt die Erkenntnis zugrunde, dass sich die Gesamtverluste des Leistungsfeldeffekttransistors unter Berücksichtigung der Durchlass-, Schalt- und Ansteuerverluste deutlich reduzieren lassen, wenn die im eingeschalteten Zustand am Gate des Leistungsfeldeffekttransistors anliegende Einschaltspannung variabel und abhängig von dem lastabhängigen Messwert gewählt wird. Soll beispielsweise nur eine sehr kleine Last versorgt werden, wodurch auch nur ein sehr kleiner Strom von dem Leistungsfeldeffekttransistor im eingeschalteten Zustand geführt werden muss, so ist es im Sinne des Gesamtwirkungsgrades nicht sinnvoll, die Gatekapazität voll aufzuladen. Insbesondere bei einer hohen Schaltfrequenz dominieren dann die Ansteuerverluste, die durch das Umladen des Gates hervorgerufen werden, gegenüber den Durchlassverlusten im eingeschalteten Zustand des Leistungsfeldeffekttransistors. In diesem Fall ist eine Reduzierung der Gatespannung und damit der Umladungsverluste auf Kosten der Durchlassverluste sinnvoll.

Erfindungsgemäß wird dies erreicht, indem die im eingeschalteten Zustand anliegende Durchlassspannung des Leistungsfeldeffekttransistors in Abhängigkeit der Höhe der Last und des Referenzwertes gesteuert wird. Stellglied ist hierbei die Gate-Source-Spannung, die bei hoher Last hoch und bei niedriger Last niedrig gewählt wird.

Der Vorteil einer derartigen Steuerung der Durchlassspannung am Leistungsfeldeffekttransistor, der Drain-Source-Spannung, ist, dass die Gesamtverluste des Bauelementes lastabhängig optimiert werden können.

Das System ist zur Verwendung innerhalb eines Schaltnetzteils vorgesehen. Heutige Schaltnetzteile arbeiten teilweise mit Frequenzen im Megahertzbereich, bei denen die Ansteuerungsverluste eine erhebliche Rolle spielen. Aufgrund der gewaltigen Anzahl von Schaltnetzteilen, die heutzutage sowohl im haushaltsnahen Bereich als auch bei industriellen Anwendungen eingesetzt werden, ist hier einer Optimierung des Gesamtwirkungsgrades eine sehr hohe Bedeutung beizumessen.

In vorteilhafter Ausgestaltung der Erfindung weist die Messeinrichtung einen Spannungswandler zur Messung einer zur Ausgangsspannung proportionalen Spannung und/oder einen Stromwandler zur Messung eines zum Ausgangsstrom proportionalen Stromes auf. Hierbei ist der Messwert folglich die Ausgangsspannung oder der Ausgangsstrom; es können aber auch beide Größen zur Bestimmung der Gate-Source-Spannung herangezogen werden, wobei beide Größen mit einem eigenen Referenzwert zu vergleichen sind. Als Spannungswandler können ohmsche oder kapazitive Teile eingesetzt werden. Als Stromwandler können Stromteiler oder auch Hallsensoren Einsatz finden, um hier nur einige Beispiele zu nennen.

Eine weitere vorteilhafte Ausführungsform der Erfindung kennzeichnet sich dadurch, dass die Messgröße als Regelgröße zur Regelung der Ausgangsspannung des Schaltnetzteils verwendbar ist. Der besondere Vorteil liegt hierbei darin, dass nur eine Messgröße erfasst werden muss, um die Ausgangsspannung zu regeln und die Einschaltspannung des MOSFETs zu steuern.

In weiterer vorteilhafter Ausgestaltung der Erfindung weist das System Mittel zur Bestimmung des Referenzwertes in Abhängigkeit eines vom Leistungsfeldeffekttransistors zu leitenden Stromes auf derart, dass die Summe aus den Ansteuerungsverlusten und den Durchlassverlusten des Leistungsfeldeffekttransistors minimiert wird. Beispielsweise umfassen die Mittel einen Mikrocontroller, mit dessen Hilfe ein lastabhängiges Optimum bezüglich der Verteilung von Durchlassverlusten und Ansteuerungsverlusten auf die Gesamtverlustleistung des Leistungsfeldeffekttransistors bestimmt wird.

In weiterer vorteilhafter Ausgestaltung der Erfindung ist die Steuerungseinheit zur Bestimmung der Versorgungsspannung eines Gatetreibers des Leistungsfeldeffekttransistors vorgesehen. Die Versorgungsspannung des Gatetreibers hat direkten Einfluss auf die im eingeschalteten Zustand des Leistungsfeldeffekttransistors am Gate anliegende Steuerspannung.

In weiterer Ausgestaltung der Erfindung ist der Leistungsfeldeffekttransistor als MOSFET oder JFET ausgeführt. Sowohl MOSFET als auch JFET besitzen im voll ausgesteuerten Bereich eine nahezu lineare Stromspannungskennlinie. Es handelt sich um unipolare Bauelemente, bei denen eine Ausführung der erfindungsgemäßen Durchlassspannungssteuerung sehr gut angewendet werden kann.

Eine vorteilhafte Ausführungsform der Erfindung ist dadurch gekennzeichnet, dass die Messeinrichtung einen Differenzverstärker und die Steuerungseinheit einen Transistor aufweist, an dessen Steuereingang eine vom Ausgang des Differenzverstärkers abhängige Steuerspannung anliegt. Der Differenzverstärker verstärkt die Abweichung des Messwertes von dem Referenzwert und erzeugt ein entsprechendes Ausgangssignal, welches wiederum den Transistor ansteuert, der seinerseits direkten Einfluss auf die Höhe der Gate-Source-Spannung hat.

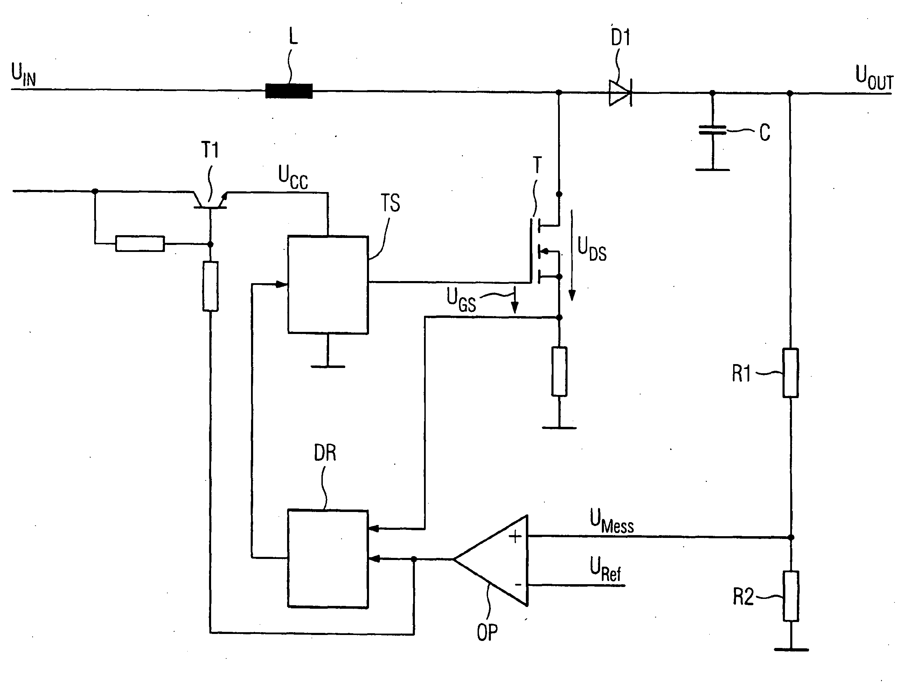

Im Folgenden wird die Erfindung anhand des in der Figur dargestellten Ausführungsbeispiels näher beschrieben und erläutert.

Die Figur zeigt einen Schaltplan eines als Hochsetzstellers ausgeführten Schaltnetzteiles mit einem Leistungsfeldeffekttransistor T, dessen Durchlassspannung U_{DS} lastabhängig gesteuert wird.

Der Leistungsfeldeffekttransistor T ist als n-kanal Leistungs-MOSFET ausgeführt.

Ziel der dargestellten Schaltung ist es, eine Eingangsspannung U_{IN} in eine höhere Ausgangsspannung U_{OUT} umzuwandeln, über die eine an das Schaltnetzteil anzuschließende Last gespeist wird. Im eingeschalteten Zustand des MOSFET's T wird über eine Glättungsinduktivität L ein Strom aufgebaut, der nach Abschalten des MOSFET's T in der sogenannten "Boostphase" über eine Diode D1 einen Glättungskondensator C lädt. Der MOSFET T wird mit dem sogenannten Dutycycle periodisch getaktet. Abhängig von diesem Dutycycle, der das Verhältnis der Einschaltdauer des MOSFET's T zur Schaltperiode angibt, stellt sich die Ausgangsspannung U_{OUT} am Ausgang des Schaltnetzteiles ein.

Die Besonderheit des dargestellten Hochsetzstellers liegt darin, dass die zum Einschalten des MOSFET's T angelegte Einschaltspannung U_{GS}, die mittels eines Treibers TS zwischen Gate und Source angelegt wird, von der Höhe der zu speisenden Last abhängt. Hierzu wird mit Hilfe eines ohmschen Spannungsteilers R1,R2 ein Messwert Uₘₑₛₛ abgegriffen, der zum Wert der Ausgangsspannung U_{OUT} proportional ist. Dieser Messwert Uₘₑₛₛ ist zunächst durch die Höhe der Last determiniert. Vergrößert sich die Last, so dass dem Schaltnetzteil ein höherer Strom entnommen wird, so wird zunächst der Glättungskondensator C stärker entladen als er über die Diode D1 nachgeladen wird. Dies hat eine Verringerung der Ausgangsspannung U_{OUT} und der Messgröße Uₘₑₛₛ zur Folge.

Die Messgröße Uₘₑₛₛ liegt am Eingang eines Differenzverstärkers OP an. Dieser verstärkt die Abweichung des Messwertes Uₘₑₛₛ von einem vorgegebenen Referenzwert U_{Ref}. Der Ausgang des Differenzverstärkers OP wird zum einen auf einen Dutycycle-Regler DR gegeben, der durch Anpassung des Dutycycles besagte Abweichung wieder ausregelt. Zum anderen wird der Ausgang des Differenzverstärkers OP auf die Basis eines bipolaren Transistors T1 geschaltet. Bei einer Erhöhung der Last wird die Basis somit weiter aufgesteuert, wodurch die Versorgungsspannung eines Gatetreibers TS des Leistungs-MOSFET's T mit einer höheren Spannung versorgt wird. In der Folge wird auch die von der Treiberstufe TS erzeugte Gate-Source-Spannung U_{GS} weiter erhöht, wodurch schließlich die Durchlassspannung U_{DS} des Transistors T reduziert wird.

In analoger Weise führt eine Lastverringerung zu einer Reduzierung der Gate-Source-Spannung des MOSFET's T im eingeschalteten Zustand.

Auf diese Art und Weise kann ein Optimum für den Gesamtwirkungsgrad des dargestellten Schaltnetzteiles eingestellt werden, indem durch eine geeignete, lastabhängige Wahl der Einschaltspannung U_{GS}, die die Durchlassspannung U_{DS} maßgeblich bestimmt, eine Reduzierung der Ansteuerungsverluste des MOSFET'S T erzielt wird.

## Patentansprüche

1. System zur lastabhängigen Bestimmung einer zwischen Gate und Source eines Leistungsfeldeffekttransistors (T) während des eingeschalteten Zustands des Leistungsfeldeffekttransistors (T) anzulegenden Einschaltspannung (U_{GS}), wobei der Leistungsfeldeffekttransistor (T) zur Einstellung einer Ausgangsspannung (U_{OUT}) eines Schaltnetzteiles durch getaktetes Ein- und Ausschalten vorgesehen ist, wobei das Schaltnetzteil neben dem Leistungsfeldeffekttransistor (T) eine Ladespule (L), eine Diode (D1) sowie einen Glättungskondensator (C) aufweist und wobei das System umfasst:
- eine Spannungsmesseinrichtung zur Messung eines zur Ausgangsspannung (U_{OUT}) proportionalen Spannungsmesswertes (Uₘₑₛₛ) und zum Vergleich des Spannungsmesswertes (Uₘₑₛₛ) mit einem Referenzwert (U_{Ref}), zur Erfassung einer Änderung einer mittels des Schaltnetzteiles versorgten Last durch die Messung des Spannungsmesswertes (Uₘₑₛₛ), und
- eine Steuerungseinheit zur Bestimmung der Einschaltspannung (U_{GS}) in Abhängigkeit des Ergebnisses besagten Vergleiches derart, dass die Einschaltspannung (U_{GS}) mit zunehmender Last erhöht und mit abnehmender Last reduziert wird.

2. System nach Anspruch 1,
wobei der Spannungsmesswert (Uₘₑₛₛ) als Regelgröße zur Regelung der Ausgangsspannung (U_{OUT}) des Schaltnetzteils verwendbar ist.

3. System zur lastabhängigen Bestimmung einer zwischen Gate und Source eines Leistungsfeldeffekttransistors (T) während des eingeschalteten Zustands des Leistungsfeldeffekttransistors (T) anzulegenden Einschaltspannung (U_{GS}), wobei der Leistungsfeldeffekttransistor (T) zur Einstellung einer Ausgangsspannung (U_{OUT})eines Schaltnetzteiles durch getaktetes Ein- und Ausschalten vorgesehen ist, wobei das Schaltnetzteil neben dem Leistungsfeldeffekttransistor (T) eine Ladespule (L), eine Diode (D1) sowie einen Glättungskondensator (C) aufweist und wobei das System umfasst:
- eine Strommesseinrichtung zur Messung eines zu einem Ausgangsstrom des Schaltnetzteils proportionalen Strommesswertes und zum Vergleich des Strommesswertes mit einem weiteren Referenzwert, zur Erfassung einer Änderung einer mittels des Schaltnetzteiles versorgten Last durch die Messung des Strommesswertes, und
- eine Steuerungseinheit zur Bestimmung der Einschaltspannung (U_{GS}) in Abhängigkeit des Ergebnisses besagten Vergleiches derart, dass die Einschaltspannung (U_{GS}) mit zunehmender Last erhöht und mit abnehmender Last reduziert wird.

4. System nach einem der vorhergehenden Ansprüche,
wobei das System Mittel zur Bestimmung des Referenzwertes (U_{Ref}) in Abhängigkeit eines vom Leistungsfeldeffekttransistor (T) zu leitenden Stromes aufweist derart, dass die Summe aus den Ansteuerungsverlusten und den Durchlassverlusten des Leistungsfeldeffekttransistors (T) minimiert wird.

5. System nach einem der vorhergehenden Ansprüche,
wobei die Steuerungseinheit zur Bestimmung der Versorgungsspannung (U_{CC}) eines Gatetreibers (TS) des Leistungsfeldeffekttransistors (T) vorgesehen ist.

6. Treiberstufe zur Ansteuerung eines Leistungsfeldeffekttransistors (T), umfassend ein System nach einem der vorhergehenden Ansprüche 1 bis 5.

7. Schaltnetzteil, insbesondere Hochsetzsteller, zur Umwandlung einer Eingangsspannung (U_{IN}) in eine Ausgangsspannung (U_{OUT}), wobei das Schaltnetzteil einen Leistungsfeldeffekttransistor (T) zur Einstellung der Ausgangsspannung (U_{OUT}) durch getaktetes Ein- und Ausschalten des Leistungsfeldeffekttransistors (T) sowie eine Ladespule (L), eine Diode (D1) und einen Glättungskondensator (C) aufweist,
**dadurch gekennzeichnet,**
**dass** das Schaltnetzteil ein System nach einem der Ansprüche 1 bis 5 zur Bestimmung einer zwischen Gate und Source des Leistungsfeldeffekttransistors (T) während des eingeschalteten Zustands des Leistungsfeldeffekttransistors (T) anzulegenden Einschaltspannung (U_{GS})aufweist.

8. Verfahren zur lastabhängigen Bestimmung einer zwischen Gate und Source eines Leistungsfeldeffekttransistors (T) während des eingeschalteten Zustands des Leistungsfeldeffekttransistors (T) anzulegenden Einschaltspannung (U_{GS}), wobei der Leistungsfeldeffekttransistor (T) zur Einstellung einer Ausgangsspannung (U_{OUT}) eines Schaltnetzteiles mit einer Ladespule (L), einer Diode (D1) sowie einem Glättungskondensator (C) durch getaktetes Ein- und Ausschalten vorgesehen ist und wobei das Verfahren folgende Schritte umfasst:
- Messen eines zur Ausgangsspannung (U_{OUT}) proportionalen Spannungsmesswertes (Uₘₑₛₛ) und Vergleich des Spannungsmesswertes (Uₘₑₛₛ) mit einem Referenzwert (U_{Ref}) mittels einer Spannungsmesseinrichtung, zur Erfassung einer Änderung einer mittels des Schaltnetzteiles versorgten Last durch die Messung des Spannungsmesswertes, und
- Bestimmen der Einschaltspannung (U_{GS}) in Abhängigkeit des Ergebnisses besagten Vergleiches mittels einer Steuerungseinheit derart, dass die Einschaltspannung (U_{GS}) mit zunehmender Last erhöht und mit abnehmender Last reduziert wird.

9. Verfahren nach Anspruch 8,
wobei der Spannungsmesswert (Uₘₑₛₛ) als Regelgröße zur Regelung der Ausgangsspannung (U_{OUT}) des Schaltnetzteils verwendet wird.

10. Verfahren zur lastabhängigen Bestimmung einer zwischen Gate und Source eines Leistungsfeldeffekttransistors (T) während des eingeschalteten Zustands des Leistungsfeldeffekttransistors (T) anzulegenden Einschaltspannung (U_{GS}), wobei der Leistungsfeldeffekttransistor (T) zur Einstellung einer Ausgangsspannung (U_{OUT}) eines Schaltnetzteiles mit einer Ladespule (L), einer Diode (D1) sowie einem Glättungskondensator (C) durch getaktetes Ein- und Ausschalten vorgesehen ist und wobei das Verfahren folgende Schritte umfasst:
- Messen eines zu einem Ausgangsstrom des Schaltnetzteils proportionalen Strommesswertes und Vergleich des Strommesswertes mit einem weiteren Referenzwert mittels einer Strommesseinrichtung, zur Erfassung einer Änderung einer mittels des Schaltnetzteiles versorgten Last durch die Messung des Strommesswertes, und
- Bestimmen der Einschaltspannung (U_{GS}) in Abhängigkeit des Ergebnisses besagten Vergleiches mittels einer Steuerungseinheit derart, dass die Einschaltspannung (U_{GS}) mit zunehmender Last erhöht und mit abnehmender Last reduziert wird.

11. Verfahren nach einem der Ansprüche 8 bis 10,
wobei der Referenzwert (U_{Ref}) in Abhängigkeit eines vom Leistungsfeldeffekttransistor (T) zu leitenden Stromes bestimmt wird derart, dass die Summe aus den Ansteuerungsverlusten und den Durchlassverlusten des Leistungsfeldeffekttransistors (T) minimiert wird.

## Claims

1. A system for load-dependent determination of a switch-on voltage (U_{GS}) to be applied between gate and source of a power field effect transistor (T) during the switched-on state, with the power field effect transistor (T) being provided for setting an output voltage (U_{OUT}) of a switched-mode power supply by clocked switching on and switching off, with the switched-mode power supply, in addition to the power field effect transistor (T), also including a charging coil (L), a diode (D1) and a smoothing capacitor (C) and with the system comprising the following:
- A voltage measurement device for measuring a voltage measurement value (mess) proportional to the output voltage (U_{OUT}) and for comparing the voltage measurement value (mess) to a reference value (U_{Ref}) for detecting a change in a load supplied by means of the switched-mode power supply by measuring the voltage measurement value (Uₘₑₛₛ), and
- A control unit for determining the switch-on voltage (U_{GS}) as a function of the result of said comparison such that the switch-on voltage (U_{GS}) is increased as the load increases and is reduced as the load reduces.

2. The system according to claim 1,
with the voltage measurement value (Uₘₑₛₛ) able to be used as a control variable for regulating the output voltage (U_{OUT}) of the switched-mode power supply.

3. The system for load-dependent determination of a switch-on voltage (U_{GS}) to be applied between gate and source of a power field effect transistor (T), with the power field effect transistor (T) being provided for setting an output voltage (U_{OUT}) of a switched-mode power supply by clocked switching on and switching off, with the switched-mode power supply, in addition to the power field effect transistor (T), also including a charging coil (L), a diode (D1) and a smoothing capacitor (C) and with the system comprising the following:
- A voltage measurement device for measuring a voltage measurement value proportional to the output voltage of the switched-mode power supply and for comparing the voltage measurement value to a further reference value for detecting a change in a load supplied by means of the switched-mode power supply by measuring the voltage measurement value, and
- A control unit for determining the switch-on voltage (U_{GS}) as a function of the result of said comparison such that the switch-on voltage (U_{GS}) is increased as the load increases and is reduced as the load reduces.

4. The system according to one of the previous claims, with the system featuring means for determining the reference value (U_{Ref}) as a function of a current to be conducted by the power field effect transistor (T) such that the sum of the power-on losses and the forward power losses of the power field effect transistor (T) will be minimized.

5. The system according to one of the previous claims, with the control unit being provided for determining the supply voltage (U_{cc}) of a gate driver (TS) of the power field effect transistor (T).

6. A driver stage for controlling a power field effect transistor (T), comprising a system according to one of the previous claims 1 to 5.

7. A switched-mode power supply, especially a boost converter for converting an input voltage (U_{IN}) into an output voltage (U_{OUT}), with the switched-mode power supply featuring a power field effect transistor (T) for setting the output voltage (U_{OUT}) by clocked switching on and switching off of the power field effect transistor (T) as well as a charge coil (L), a diode (D1) and a smoothing capacitor (C),
**characterized in that**
the switched-mode power supply features a system according to one of claims 1 to 5 for determining a switch-on voltage (U_{GS}) to be applied between gate and source of the power field effect transistor (T) during the switched-on state of the power field effect transistor (T).

8. A method for load-dependent determination of a switch-on voltage (U_{GS}) to be applied between gate and source of a power field effect transistor (T) during the switched-on state, with the power field effect transistor (T) being provided for setting an output voltage (U_{OUT}) of a switched-mode power supply by clocked switching on and switching off, with the switched-mode power supply, in addition to the power field effect transistor (T), also including a charging coil (L), a diode (D1) and a smoothing capacitor (C) and with the method comprising the following steps:
- Measuring a voltage measurement value (Uₘₑₛₛ) proportional to the output voltage (U_{OUT}) and comparing the voltage measurement value (Uₘₑₛₛ) to a reference value (U_{Ref}) by means of a voltage measurement device for detecting a change in a load supplied by means of the switched-mode power supply by measuring the voltage measurement value (Uₘₑₛₛ), and
- Determining the switch-on voltage (U_{GS}) as a function of the result of said comparison by means of a control unit, such that the switch-on voltage (U_{GS}) is increased as the load increases and reduced as the load decreases.

9. The method according to claim 8,
with the voltage measurement value (Uₘₑₛₛ) being used as a control value for regulating the output voltage (U_{OUT}) of the switched-mode power supply.

10. A method for load-dependent determination of a switch-on voltage (U_{GS}) to be applied between gate and source of a power field effect transistor (T) during the switched-on state of the power field effect transistor (T), with the power field effect transistor (T), for setting an output voltage (U_{OUT}) of a switched-mode power supply being provided with a charging coil (L), a diode (D1) and a smoothing capacitor (C) and with the method comprising the following steps:
- Measuring a voltage measurement value proportional to the output voltage and comparing the voltage measurement value to a reference value (by means of a voltage measurement device for detecting a change in a load supplied by means of the switched-mode power supply by measuring the voltage measurement value, and
- Determining the switch-on voltage (U_{GS}) as a function of the result of said comparison by means of a control unit, such that the switch-on voltage (U_{GS}) increases as the load increases and reduces as the load decreases.

11. The method according to one of claims 8 to 10,
with the reference value (U_{Ref}) being determined as a function of a current to be conducted by the power field effect transistor (T) such that the sum of the power-on losses and the forward power losses of the power field effect transistor (T) will be minimized.

## Revendications

1. Système pour déterminer en fonction de la charge une tension ( U_{GS} ) de seuil s'appliquant, pendant l'état passant d'un transistor ( T ) de puissance à effet de champ, entre la grille et la source du transistor ( T ) de puissance à effet de champ, dans lequel le transistor ( T ) de puissance à effet de champ est prévu pour le réglage d'une tension ( U_{OUT} ) de sortie d'une alimentation à découpage par mise à l'état passant et à l'état bloqué cadencée, dans lequel l'alimentation à découpage a, outre le transistor ( T ) de puissance à effet de champ, une bobine ( L ) de charge, une diode ( D1 ) ainsi qu'un condensateur ( C ) de lissage et dans lequel le système comprend :
- un dispositif de mesure de la tension, pour mesurer une valeur ( Uₘₑₛₛ ) de mesure de la tension proportionnelle à la tension ( U_{OUT} ) de sortie et pour comparer la valeur ( Uₘₑₛₛ ) de mesure de la tension à une valeur ( U_{Ref} ) de référence, pour la détection par la mesure de la valeur ( Uₘₑₛₛ ) de mesure de la tension d'une variation d'une charge alimentée au moyen de l'alimentation en découpage, et
- une unité de commande, pour la détermination de la tension ( U_{GS} ) de seuil en fonction du résultat de ladite comparaison, de façon à ce que la tension ( U_{GS} ) de seuil soit élevée lorsque la charge augmente et soit réduite lorsque la charge diminue.

2. Système suivant la revendication 1,
dans lequel la valeur ( Uₘₑₛₛ ) de mesure de la tension peut être utilisée comme grandeur réglante, pour la régulation de la tension ( U_{OUT} ) de sortie de l'alimentation à découpage.

3. Système pour déterminer en fonction de la charge une tension ( U_{GS} ) de seuil s'appliquant, pendant l'état passant d'un transistor ( T ) de puissance à effet de champ, entre la grille et la source du transistor ( T ) de puissance à effet de champ, dans lequel le transistor ( T ) de puissance à effet de champ est prévu pour le réglage d'une tension ( U_{OUT} ) de sortie d'une alimentation à découpage par mise à l'état passant et à l'état bloqué cadencée, dans lequel l'alimentation à découpage a, outre le transistor ( T ) de puissance à effet de champ, une bobine ( L ) de charge, une diode ( D1 ) ainsi qu'un condensateur ( C ) de lissage et dans lequel le système comprend :
- un dispositif de mesure du courant, pour mesurer une valeur de mesure du courant proportionnelle à un courant de sortie de l'alimentation à découpage et pour comparer la valeur de mesure du courant à une autre valeur de référence et pour détecter, par la mesure de la valeur de mesure du courant, une variation d'une charge alimentée au moyen de l'alimentation en découpage, et
- une unité de commande, pour la détermination de la tension ( U_{GS} ) de seuil en fonction du résultat de ladite comparaison, de façon à ce que la tension ( U_{GS} ) de seuil soit élevée lorsque la charge augmente et soit réduite lorsque la charge diminue.

4. Système suivant l'une des revendications précédentes,
dans lequel le système a un moyen de détermination de la valeur ( U_{Ref} ) de référence, en fonction d'un courant devant passer dans le transistor ( T ) de puissance à effet de champ, de manière à minimiser la somme des pertes de commande et les pertes de transmission du transistor ( T ) de puissance à effet de champ.

5. Système suivant l'une des revendications précédentes,
dans lequel l'unité de commande est prévue pour la détermination de la tension ( U_{CC} ) d'alimentation d'un étage ( TS ) de grille du transistor ( T ) de puissance à effet de champ.

6. Etage d'attaque pour commander un transistor ( T ) de puissance à effet de champ, comprenant un système suivant l'une des revendications 1 à 5.

7. Alimentation à découpage, notamment survolteur, pour transformer une tension ( U_{IN} ) d'entrée en une tension ( U_{OUT} ) de sortie, l'alimentation à découpage ayant un transistor ( T ) de puissance à effet de champ pour régler la tension ( U_{OUT} ) de sortie par mise à l'état passant et à l'état bloqué cadencée du transistor ( T ) de puissance à effet de champ, ainsi qu'une bobine ( L ) de charge et une diode ( D1 ) et un condensateur ( C ) de lissage,
**caractérisée**
**en ce que** l'alimentation à découpage a un système suivant l'une des revendications 1 à 5, pour la détermination d'une tension ( U_{GS} ) de seuil s'appliquant, pendant que le transistor ( T ) de puissance à effet de champ est à l'état passant, entre la source et la grille du transistor ( T ) de puissance à effet de champ.

8. Procédé pour déterminer en fonction de la charge une tension ( U_{GS} ) de seuil s'appliquant, pendant qu'un transistor ( T ) de puissance à effet de champ est à l'état passant, entre la grille et la source du transistor ( T ) de puissance à effet de champ, dans lequel le transistor ( T ) de puissance à effet de champ est prévu pour, par mise à l'état passant et mise à l'état bloqué cadencée, le réglage d'une tension ( U_{OUT} ) de sortie d'une alimentation à découpage comprenant une bobine ( L ) de charge, une diode ( D1 ) ainsi qu'un condensateur ( C ) de lissage et dans lequel le procédé comprend les stades suivantes :
- la mesure d'une valeur ( Uₘₑₛₛ ) de tension proportionnelle à la tension ( U_{OUT} ) de sortie et la comparaison de la valeur ( Uₘₑₛₛ ) de mesure de la tension à une valeur ( U_{Ref} ) de référence au moyen d'un dispositif de mesure de la tension, pour la détection par la mesure de la valeur de mesure de la tension d'une variation d'une charge alimentée au moyen de l'alimentation à découpage, et
- la détermination au moyen d'une unité de commande de la tension ( U_{GS} ) de seuil en fonction du résultat de ladite comparaison, de manière à élever la tension ( U_{GS} ) de seuil lorsque la charge augmente et à la réduire lorsque la charge diminue.

9. Procédé suivant la revendication 8,
dans lequel on utilise la valeur ( Uₘₑₛₛ ) de mesure de la tension comme grandeur réglante pour régler la tension ( U_{OUT} ) de sortie de l'alimentation à découpage.

10. procédé pour déterminer en fonction de la charge une tension ( U_{GS} ) de seuil s'appliquant, pendant qu'un transistor ( T ) de puissance à effet de champ est à l'état passant, entre la grille et la source du transistor ( T ) de puissance à effet de champ, dans lequel le transistor ( T ) de puissance à effet de champ est prévu pour, par mise à l'état passant et mise à l'état bloqué cadencée, le réglage d'une tension ( U_{OUT} ) de sortie d'une alimentation à découpage comprenant une bobine ( L ) de charge, une diode ( D1 ) ainsi qu'un condensateur ( C ) de lissage et dans lequel le procédé comprend les stades suivants :
- la mesure d'une valeur de mesure du courant proportionnelle au courant de sortie de l'alimentation à découpage et la comparaison de la valeur de mesure du courant à une autre valeur de référence au moyen d'un dispositif de mesure du courant, pour la détection par la mesure de la valeur de mesure du courant d'une variation d'une charge alimentée au moyen de l'alimentation à découpage, et
- la détermination au moyen d'une unité de commande de la tension ( U_{GS} ) de seuil en fonction du résultat de ladite comparaison, de manière à élever la tension ( U_{GS} ) de seuil lorsque la charge augmente et à la réduire lorsque la charge diminue.

11. Procédé suivant l'une des revendications 8 à 10,
dans lequel on détermine la valeur ( U_{Ref} ) de référence en fonction d'un courant à faire passer par le transistor ( T ) de puissance à effet de champ, de façon à minimiser la somme des pertes de commande et des pertes de transmission du transistor ( T ) de puissance à effet de champ.
